# EUROPÄISCHE PATENTSCHRIFT

(11) **EP 3 755 584 B1**
(45) Veröffentlichungstag und Bekanntmachung des Hinweises auf die Patenterteilung: **27.10.2021**
(21) Anmeldenummer: 19707753.0
(22) Anmeldetag: 21.02.2019
(51) Int. Cl.: B60R 22/48, G06Q 10/00

(54) **INSASSEN-RÜCKHALTESYSTEM IN EINEM SELBSTFAHRENDEN FAHRZEUG**
OCCUPANT RETAINING SYSTEM IN AN AUTONOMOUS VEHICLE
SYSTÈME DE RETENUE DE PASSAGERS DANS UN VÉHICULE AUTOMOTEUR

(30) Priorität: 22.02.2018 DE 102018202696
(43) Veröffentlichungstag der Anmeldung: 30.12.2020
(73) Patentinhaber: VOLKSWAGEN AKTIENGESELLSCHAFT, 38440 Wolfsburg (DE)
(72) Erfinder: WOHLLEBE, Thomas, 38547 Calberlah (DE); BAIDUC, Florin, 267-0067 Chiba-pref (DE)
(86) Internationale Anmeldenummer: PCT/EP2019/054358
(87) Internationale Veröffentlichungsnummer: WO 2019/162399

(56) Entgegenhaltungen:
- EP-A1- 3 176 666
- US-A1- 2015 348 335
- US-B1- 6 540 040
- US-B1- 9 811 086

## Beschreibung

Die Erfindung betrifft ein Insassen-Rückhaltesystem in einem selbstfahrenden Fahrzeug nach dem Oberbegriff des Anspruches 1.

Ein Anwendungsbereich von selbstfahrenden Fahrzeugen betrifft sogenannte Roboter-Taxis, die im Dauerbetrieb Kunden befördern. Hierzu wird das Roboter-Taxi von einem Kunden für eine Fahrt bestellt, nachdem das Roboter-Taxi eine vorangegangene Kunden-Beförderung abgeschlossen hat. Zur Gewährleistung des Insassenschutzes sowie aus haftungsrechtlichen Gründen muss der Passagier des selbstfahrenden Fahrzeugs während der Fahrt angeschnallt sein. Sind nicht sämtliche Passagiere im Fahrzeug angeschnallt, fährt das Fahrzeug nicht los. Ein beispielhaftes Insassen-Rückhaltesystem stellt dem zu befördernden Kunden eine Rückhaltefunktion (d.h. einen Sicherheitsgurt) bereit, die von dem zu befördernden Kunden aktivierbar ist. Das Insassen-Rückhaltesystem weist zudem eine Auswerteeinheit auf, mittels der in einer Sicherheitsprüfung geprüft wird, ob die Rückhaltefunktion vom zu befördernden Kunden (Passagier) aktiviert ist oder nicht. Die Auswerteeinheit unterbindet bei Nichtvorliegen einer aktivierten Rückhaltefunktion eine Losfahrt des Fahrzeuges.

Beispielhaft kann das Insassen-Rückhaltesystem eine Sicherheitsgurtanordnung sein, bei der ein Sicherheitsgurt im angelegten Zustand über seine Gurtzunge in einer lösbaren Steckverbindung mit einem fahrzeugfesten Gurtschloss ist. In diesem Fall kann die Sicherheitsprüfung auf der Grundlage eines Gurtschloss-Sensors erfolgen, der erfasst, ob die Gurtzunge in das Gurtschloss eingesteckt ist oder nicht. Wird vom Gurtschloss-Sensor eine in das Gurtschloss eingesteckte Gurtzunge detektiert, so erkennt die Auswerteeinheit, dass die Rückhaltefunktion, das heißt der Sicherheitsgurt, aktiviert ist. In diesem Fall fährt das selbstfahrende Fahrzeug los.

Eine solche Sicherheitsprüfung erfolgt erst, nachdem der Kunde das Fahrzeug bestellt hat und dieser sich bereits im Fahrzeug befindet. Der Kunde ist somit bereits in das vorbestellte Fahrzeug eingestiegen und erkennt erst dann, dass ein ordnungsgemäßes Anschnallen aufgrund der defekten Sicherheitsgurtanordnung nicht möglich ist. Entsprechend muss der Kunde wieder aus dem vorbestellten Robotertaxi aussteigen und ein anderes Robotertaxi bestellen, was mit Komforteinbußen sowie hohem Zeitaufwand verbunden ist.

Aus der DE 100 02 378 A1 ist eine Sitzgurtvorrichtung mit einem Fahrgastdetektor und einem Gurtschließdetektor bekannt. Die beiden Detektoren sind bezüglich einer Fehlfunktion diagnosefähig. Mit dem Fahrgastdetektor soll die Anwesenheit eines Fahrzeuginsassen auf dem Sitz erkannt werden. Der Gurtschließdetektor (Gurtschloss-Sensor) erkennt, ob der Insasse angeschnallt ist oder nicht.

Aus der US 6 540 040 B1 ist ein gattungsgemäßes Fahrzeugsicherheitssystem bekannt, für das ein Sicherheitsgurt erforderlich ist. Die EP 3 176 666 A1 offenbart ein System und ein Verfahren zur Vorhersage des Verhaltens erkannter Objekte.

Die Aufgabe der Erfindung besteht darin, ein Insassen-Rückhaltesystem in einem selbstfahrenden Fahrzeug bereitzustellen, bei dem Defekte ohne Komforteinbußen für den zu befördernden Kunden detektiert und behoben werden können.

Die Aufgabe ist durch die Merkmale des Anspruches 1 gelöst. Bevorzugte Weiterbildungen der Erfindung sind in den Unteransprüchen offenbart.

Gemäß dem Anspruch 1 kann mittels der erfindungsgemäßen Auswerteeinheit nicht die oben angedeutete Sicherheitsprüfung durchgeführt werden, bei der lediglich erfasst wird, ob eine Rückhaltefunktion (das heißt der Sicherheitsgurt) vom zu befördernden Kunden aktiviert ist oder nicht. Vielmehr ist der Auswerteeinheit zusätzlich ein Diagnosemodul zugeordnet, mit dem unabhängig von der obigen Sicherheitsprüfung eine Funktionsdiagnose über die Funktionsfähigkeit des Insassen-Rückhaltesystems durchgeführt werden kann. Das Diagnosemodul leitet bei Vorliegen eines Defektes im Insassen-Rückhaltesystem eine geeignete Service-Maßnahme ein. Eine solche Service-Maßnahme kann beispielhaft eine selbsttätige Servicefahrt des Fahrzeugs in eine Werkstatt sein oder eine Anforderung von Service-Personal, um den Defekt im Insassen-Rückhaltesystem des selbstfahrenden Fahrzeuges zu beheben.

In einer technischen Umsetzung wird also, bevor das Roboter-Taxi zu einem neuen Kunden fährt, das heißt nach jeder Fahrt mittels des Diagnosemoduls ermittelt, ob die Rückhaltevorrichtung vollfunktionsfähig ist und der Folge-Kunde sich zur Durchführung einer Fahrt in das Fahrzeug begeben kann. Entscheidend ist dabei, dass die vom Diagnosemodul durchgeführte Funktionsdiagnose der von der Auswerteeinheit durchgeführten Sicherheitsprüfung zeitlich vorgelagert ist. Die Funktionsdiagnose ist daher speziell während eines Kundenwechsels zwischen einem Kunden und einem Folge-Kunden durchzuführen, und zwar besonders bevorzugt zu einem Zeitpunkt, zu dem das Fahrzeug noch nicht dem Folge-Kunden zur Verfügung gestellt ist, das heißt sich der Folge-Kunde noch nicht im Fahrzeug befindet. Auf diese Weise kann betriebssicher gewährleistet werden, dass dem Folge-Kunden stets ein selbstfahrendes Fahrzeug mit einwandfrei funktionsfähigem Insassen-Rückhaltesystem zur Verfügung gestellt werden kann.

Erfindungsgemäß wird daher das selbstfahrende Fahrzeug erst dann für eine weitere Kunden-Beförderung zur Verfügung gestellt, wenn das Diagnosemodul ein defektfreies Insassen-Rückhaltesystem des Fahrzeugs diagnostiziert.

In einer bevorzugten technischen Umsetzung ist das Insassen-Rückhaltesystem eine Sicherheitsgurtanordnung mit einem Gurtaufroller, einem Gurtband, einer Steckzunge, einem Endbeschlag sowie einem Gurtschloss. Bei angelegtem Zustand ist der Sicherheitsgurt über seine Gurtzunge in lösbarer Steckverbindung in das fahrzeugfeste (oder sitzfeste) Gurtschloss eingesteckt.

Bei einer solchen Sicherheitsgurtanordnung ermittelt die Auswerteeinheit (wie es bereits aus dem Stand der Technik bekannt ist) in der Sicherheitsprüfung, ob der Sicherheitsgurt vom zu befördernden Kunden angelegt ist oder nicht. Bei angelegtem Sicherheitsgurt gibt die Auswerteeinheit eine Losfahrt des Fahrzeuges frei.

Die obige Sicherheitsprüfung kann bevorzugt mittels eines Gurtschloss-Sensors durchgeführt werden, der in Signalverbindung mit der Auswerteeinheit ist. Der Gurtschloss-Sensor erfasst, ob die Gurtzunge in das Gurtschloss eingesteckt ist oder nicht. Bei ordnungsgemäß eingesteckter Gurtzunge erkennt die Auswerteeinheit, dass der zu befördernde Kunde die Rückhaltefunktion (das heißt den Sicherheitsgurt) aktiviert hat.

Demgegenüber kann das Diagnosemodul mit zumindest einem Diagnosesensor in Signalverbindung sein, auf dessen Grundlage das Diagnosemodul im Rahmen der Funktionsdiagnose ermittelt, ob die Sicherheitsgurtanordnung defektfrei ist oder nicht.

In einer ersten Ausführungsvariante kann der Diagnosesensor ein Gurtschacht-Sensor sein. Dieser erfasst, ob im Einsteckschacht des Gurtschlosses eine Freigängigkeit vorliegt oder nicht, und zwar insbesondere durchgängig über die gesamte Einstecktiefe des Einsteckschachtes im Gurtschloss. Eine solche Freigängigkeit liegt beispielhaft nicht vor, wenn die Mündungsöffnung des Gurtschloss-Einsteckschachtes mit einem Kaugummi oder mit einem sonstigen Kleingegenstand verstopft ist oder wenn beispielhaft ein Kleingegenstand (zum Beispiel Geldstück) in den Einsteckschacht des Gurtschlosses gefallen ist.

Alternativ und/oder zusätzlich kann der Diagnosesensor ein Gurtbandsensor sein, der erfasst, ob am Gurtband des Sicherheitsgurtes eine Beschädigung vorliegt oder nicht. In einer technischen Ausführung können im Gurtband elektrisch leitfähige Fäden eingewebt sein und der Gurtbandsensor ein Widerstandssensor sein, der über zumindest einen Längsabschnitt des Gurtbands einen elektrischen Widerstand der eingeflochtenen elektrisch leitfähigen Fäden erfasst. Aus einer detektierten Widerstandsänderung kann in diesem Fall auf eine Gurtband-Beschädigung geschlossen werden.

Alternativ und/oder zusätzlich kann der Diagnosesensor auch ein optischer Sensor, speziell eine Innenraumkamera sein, mittels der eine solche Gurtband-Beschädigung erfassbar ist. Alternativ und/oder zusätzlich kann der Diagnosesensor auch ein Gurtbandauszug-Sensor sein, mit dem erfasst wird, ob der Sicherheitsgurt nach Gebrauch wieder ordnungsgemäß aufgewickelt ist oder nicht.

Nachfolgend ist ein Ausführungsbeispiel der Erfindung anhand der beigefügten Figuren beschrieben. Es zeigen:
- Fig. 1: in einer grob schematischen Perspektivdarstellung ein Insassen-Rückhaltesystem eines selbstfahrenden Fahrzeuges;
- Fig. 2 bis 6: jeweils unterschiedliche Ausführungsvarianten eines Gurtschlosses;
- Fig. 7 und 8: jeweils grob schematische Darstellungen eines Gurtbandes des Insassen-Rückhaltesystems; und
- Fig. 9: ein Blockschaltdiagramm, in dem Verfahrensschritte zum Betreiben des Insassen-Rückhaltesystems veranschaulicht sind.

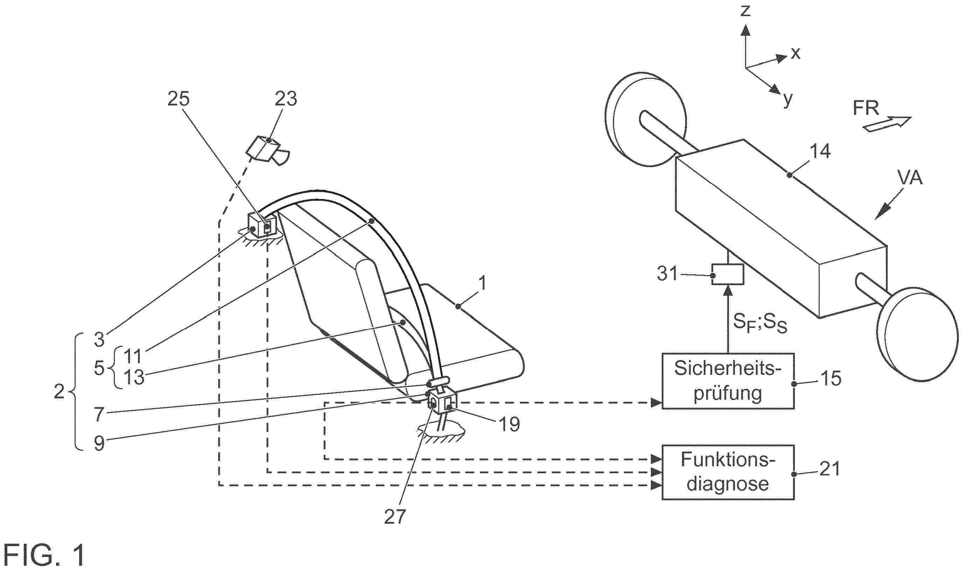

In der Fig. 1 ist in einer grob schematischen Teilperspektivansicht ein Fahrzeuginnenraum eines selbstfahrenden Fahrzeuges insoweit angedeutet, als es für das Verständnis der Erfindung erforderlich ist. Demzufolge weist der Fahrzeuginnenraum einen Fahrzeugsitz mit einer Sicherheitsgurtanordnung 2 auf, die ein Insassen-Rückhaltesystem im Sinne der Erfindung darstellt. Die Sicherheitsgurtanordnung 2 ist in an sich bekannter Weise aus einem zum Beispiel in einer Fahrzeugsäule verbauten Gurtretraktor 3, einem Drei-Punkt-Sicherheitsgurt 5, einer Steckzunge 7 sowie einem fahrzeugfesten Gurtschloss 9 aufgebaut. Der Drei-Punkt-Sicherheitsgurt 5 ist in einen Schultergurtanteil 11 und in einen Beckengurtanteil 13 unterteilt, die an der Steckzunge 7 ineinander einstückig übergehen. In der Fig. 1 ist der Sicherheitsgurt 5 im angelegten Zustand gezeigt, bei dem der Sicherheitsgurt 5 einen (nicht dargestellten) Fahrzeuginsassen am Fahrzeugsitz 1 sichert. Das in der Fig. 1 angedeutete selbstfahrende Fahrzeug weist zudem an seiner Vorderachse VA ein Antriebsaggregat 14, zum Beispiel eine Elektromaschine auf, die die Vorderräder des Fahrzeugs antreibt.

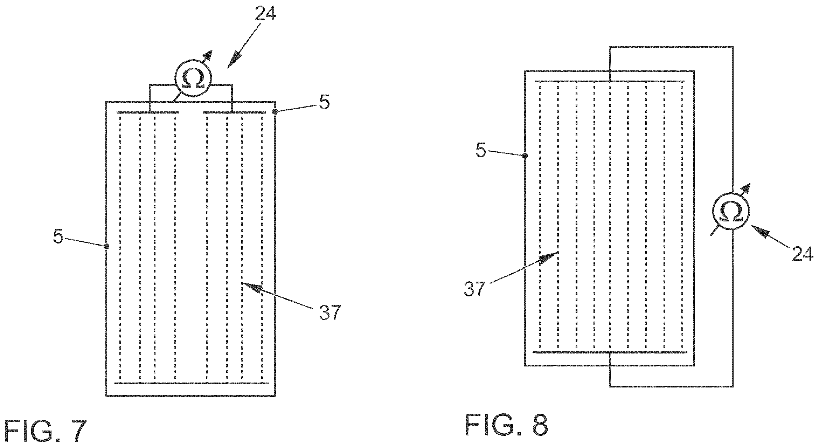

Wie aus der Fig. 1 weiter hervorgeht, ist der Sicherheitsgurtanordnung 2 eine als Blockschaltdiagramm angedeutete elektronische Auswerteeinheit 15 zugeordnet, mittels der eine später beschriebene Sicherheitsprüfung der Sicherheitsgurtanordnung 2 durchführbar ist. Die Auswerteeinrichtung 15 ist in Signalverbindung mit einem im Gurtschloss 9 verbauten Gurtschloss-Sensor 19. Zudem ist der Auswerteeinrichtung 15 ein Diagnosemodul 21 zugeordnet, das in Signalverbindung mit unterschiedlichen Diagnosesensoren ist, nämlich mit einer Innenraumkamera 23, einem im Gurtretraktor 3 verbauten Gurtbandauszug-Sensor 25 sowie einem im Gurtschloss 9 verbauten Gurtschacht-Sensor 27 sowie einem Gurtbandbeschädigungs-Sensor 24/37, der aus Gründen der Übersichtlichkeit in der Figur 1 nicht eingezeichnet ist, jedoch in den Figuren 7 und 8 detailliert dargestellt ist.

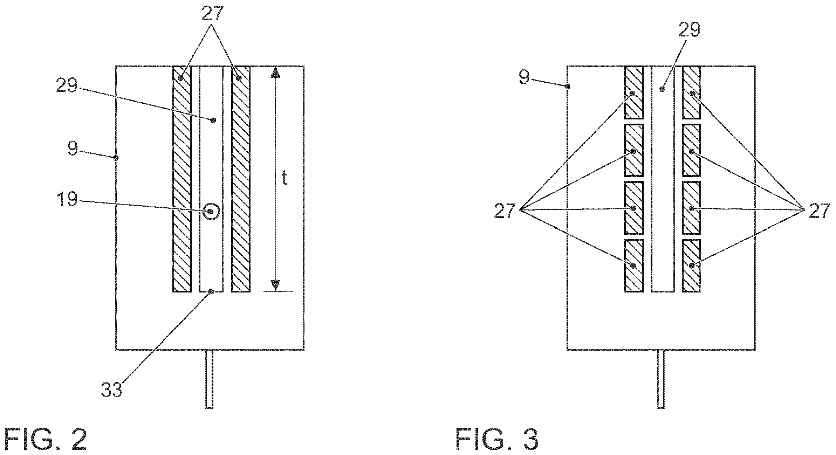

In der Fig. 2 ist das Gurtschloss 9 in einer schematischen Teilschnittansicht gezeigt. Demzufolge weist das Gurtschloss 9 einen nach oben offenen Einsteckschacht 29 auf, in dem die Gurtzunge 7 einsteckbar ist. Der Einsteckschacht 29 ragt über eine Schachttiefe t in das Gurtschloss 9 ein. Beidseitig der Schachtwände sind in der Fig. 2 durchgängig über die gesamte Schachttiefe t kapazitive Sensorelemente positioniert, die den Gurtschacht-Sensor 27 ausbilden, mit dessen Hilfe eine Freigängigkeit des Einsteckschachtes 29 geprüft werden kann. Mit den kapazitiven Sensorelementen wird eine Kapazität im Einsteckschacht 29 gemessen. Bei leerem Einsteckschacht 29 hat die Kapazität einen ersten Messwert. Bei eingesteckter Gurtzunge 7 (bekanntes Material, gleichbleibende Einstecktiefe) wird die von den kapazitiven Sensorelementen erfasste Kapazität einen zweiten Wert. Bei allen, vom ersten oder zweiten Wert abweichenden Messwerten ist eine Freigängigkeit des Einsteckschachtes 29 nicht gewährleistet.

Zudem ist in der Fig. 2 der Gurtschloss-Sensor 19 angedeutet. Der Gurtschloss-Sensor 19 kann beispielhaft ein mechanischer Schalter sein, der bei nicht eingesteckter Gurtzunge 7 in einer Ruhe-Schaltposition in den Einsteckschacht 29 einragt und bei eingesteckter Gurtzunge 7 in eine weitere Schaltposition verstellt ist. Bei Detektion dieser weiteren Schaltposition erkennt die Auswerteeinheit 17, dass die Gurtzunge 7 im Gurtschloss 9 eingesteckt ist.

Die Auswerteeinheit führt vor Beginn einer Kunden-Beförderung eine Sicherheitsprüfung durch, bei der anhand des vom Gurtschloss-Sensor 19 übermittelten Signals festgelegt wird, ob der Sicherheitsgurt 5 vom zu befördernden Kunden angelegt ist oder nicht. Sofern in der Auswerteeinheit 17 erkannt ist, dass der Sicherheitsgurt 5 vom zu befördernden Kunden angelegt ist, wird ein Freigabesignal S_{F} generiert, mit dem zum Beispiel eine Leistungselektronik 31 des Elektromotors 14 ansteuerbar ist, um ein Losfahren des Fahrzeugs freizugeben. Wird anstelle dessen in der Auswerteeinheit 17 erkannt, dass der zu befördernde Kunde den Sicherheitsgurt 5 noch nicht angelegt hat, so wird ein Sperrsignal Ss in der Auswerteeinheit 17 generiert, mit dem die Leistungselektronik 31 der Elektromaschine 14 angesteuert wird, um eine Losfahrt des Fahrzeuges zu unterbinden.

Dieser Sicherheitsprüfung ist erfindungsgemäß einer zusätzlichen Funktionsdiagnose zeitlich vorgelagert, die mittels des Diagnosemoduls 21 durchgeführt wird. Die Funktionsdiagnose wird dabei während eines Kundenwechsels zwischen einem bereits beförderten Kunden und einem Folge-Kunden durchgeführt, und zwar bei noch nicht im Fahrzeug befindlichem Folge-Kunden, das heißt, dass das Fahrzeug bei Durchführung der Funktionsdiagnose noch nicht dem Folge-Kunden zur Verfügung gestellt ist. Bei der vom Diagnosemodul 21 erfolgenden Funktionsdiagnose wird auf der Grundlage der Sensorsignale der Diagnosesensoren 23, 24, 25, 27 ermittelt, ob eine defektfreie Funktionsfähigkeit der Sicherheitsgurtanordnung 2 vorliegt oder nicht. Hierzu detektiert der Gurtschacht-Sensor 27, ob im Einsteckschacht 29 eine Freigängigkeit vorliegt oder nicht, und zwar durchgängig über die gesamte Einstecktiefe t des Einsteckschachtes 29 im Gurtschloss 9. Sofern eine solche Freigängigkeit nicht vorliegt (zum Beispiel aufgrund einer Verstopfung des Einsteckschachtes 29 mittels eines Kleingegenstandes), erfolgt ein entsprechendes Sensorsignal, auf dessen Grundlage das Diagnosemodul 21 das Vorliegen eines Defektes in der Sicherheitsgurtanordnung 2 erkennt. In diesem Fall leitet das Diagnosemodul 21 geeignete Service-Maßnahmen ein, zum Beispiel eine Servicefahrt zur Werkstätte oder die Anforderung von Servicepersonal, um den Defekt zu beheben.

Alternativ und/oder zusätzlich wird in der Fig. 1 mit Hilfe der Innenraumkamera 23 der Gurtband-Status des Sicherheitsgurtes 5 optisch geprüft. Sofern die Innenraumkamera 23 eine Gurtband-Beschädigung erfasst, erfolgt ein entsprechendes Sensorsignal, auf dessen Grundlage das Diagnosemodul 21 ebenfalls das Vorliegen eines Defektes erkennt. Alternativ und/oder zusätzlich kann mittels des Gurtbandauszug-Sensors 25 erfasst werden, ob der Sicherheitsgurt 5 nach Gebrauch ordnungsgemäß aufgewickelt ist oder nicht. Bei einer Fehl-Aufwicklung erfolgt ebenfalls ein entsprechendes Sensorsignal, auf dessen Grundlage das Diagnosemodul 21 einen Defekt der Sicherheitsgurtanordnung 2 erkennt. Alternativ und/oder zusätzlich kann während der Funktionsdiagnose auch mittels des Widerstandssensors 24 geprüft werden, ob eine Gurtband-Beschädigung vorliegt oder nicht.

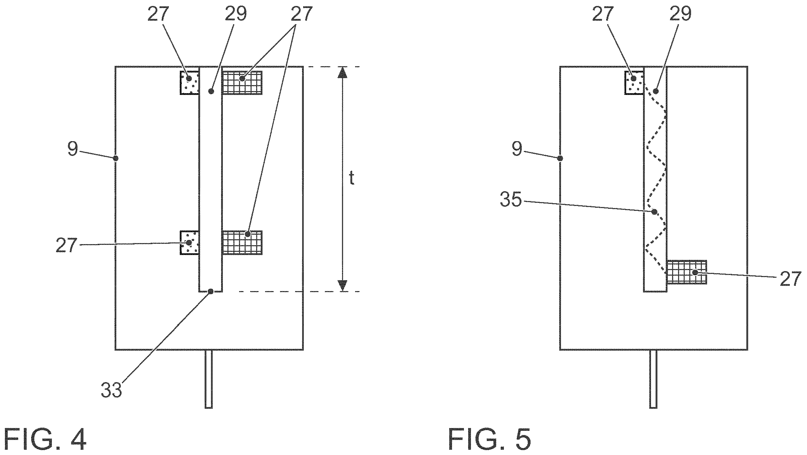

Nachfolgend sind anhand der Figuren 3 bis 6 weitere Ausführungsvarianten des Gurtschacht-Sensors 27 angedeutet: So ist gemäß der Fig. 3 der Gurtschacht-Sensor 27 nicht nur aus zwei seitlich des Einsteckschachtes 29 angeordneten kapazitiven Sensorelementen aufgebaut, sondern vielmehr aus einer Mehrzahl von kapazitiven Sensorsegmenten, wodurch eine noch genauere kapazitive Messung ermöglicht ist. In der Fig. 4 wird auf eine über die Einstecktiefe t komplett durchgängige sensorische Erfassung der Freigängigkeit verzichtet. Anstelle dessen ist in der Fig. 4 am oberen Mündungsbereich und am unteren Schachtboden 33 des Einsteckschachtes 29 jeweils ein Infrarotsensor mit zugeordnetem Infrarotstrahler positioniert. Mit dem oberen Infrarotsensor wird bei Unterbrechung des Strahlenganges erkannt, wenn zum Beispiel ein Kleingegenstand in die Mündungsöffnung des Einsteckschachtes 29 gesteckt ist. Da aber nicht unterschieden werden kann, ob der Gegenstand wieder herausgezogen wird oder ob ein kleinerer Gegenstand (zum Beispiel Geldstück) im Schacht nach unten gefallen ist, ist der weitere, untere Infrarotsensor erforderlich. Eine Freigängigkeit im Einsteckschacht 29 ist dann gegeben, wenn keiner der beiden Infrarotsensoren ein entsprechendes Signal liefert.

In der Fig. 5 ist im Bereich des Schachtbodens 33 des Einsteckschachtes 29 ein Infrarotsensor angeordnet, der in Signalverbindung (das heißt reflektierender Infrarotstrahl 35) mit einem im oberen Mündungsbereich des Einsteckschachtes 29 angeordneten Infrarotstrahlers ist. Alternativ zum vorangegangenen Sensorkonzept gemäß der Fig. 4 kann hier der gesamte Einsteckschacht 29 über seine gesamte Einstecktiefe t mit nur einem einzigen Infrarotsensor überwacht werden.

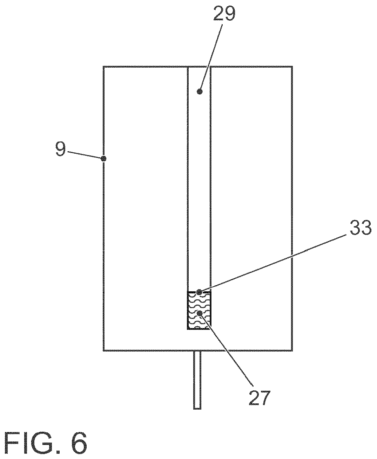

In der Fig. 6 ist am Schachtboden 33 des Einsteckschachtes 29 ein Ultraschallsensor positioniert, mit dem die Freigängigkeit des Einsteckschachtes 29 über dessen gesamte Einstecktiefe t überwacht werden kann.

Wie oben erwähnt, wird in der Fig. 1 als Gurtbandsensor beispielhaft eine Innenraumkamera 23 verwendet, mit deren Hilfe das Gurtband 5 auf mögliche Beschädigungen überprüft werden kann. Solche möglichen Beschädigungen können beispielhaft zum Beispiel Schnitte, Löcher oder Brandlöcher sein. Alternativ und/oder zusätzlich zu der in der Fig. 1 gezeigten Innenraumkamera 23 können solche Beschädigungen des Gurtbandes 5 auch mit Hilfe eines in den Fig. 7 und 8 gezeigten Widerstandssensors 24 erkannt werden. Hierzu sind in der Fig. 7 oder 8 im jeweiligen Gurtband 5 elektrisch leitfähige Fäden 37 eingewebt. Diese können zum Beispiel metallische Fäden sein oder aber auch leitende Polymerfäden. Der Vorteil von Polymerfäden besteht darin, dass sie bei höheren Temperaturen zerstört werden. Dies kann genutzt werden, um Brandstellen/Verschmelzungen am Gurtband zu erkennen.

Beispielhaft erfolgt in der Fig. 7 eine Widerstandsmessung an einem einzigen Ende des Gurtbandes 5 (zum Beispiel am Endanschlag oder im Gurtretraktor 3). Alternativ dazu erfolgt in der Fig. 8 eine Widerstandsmessung zwischen den beiden Gurtbandenden. Bei Beschädigung der Fäden im Gurtband 5 ändert sich der gemessene Widerstand. Entsprechend kann ein Defekt-Signal zum Diagnosemodul 21 geleitet werden.

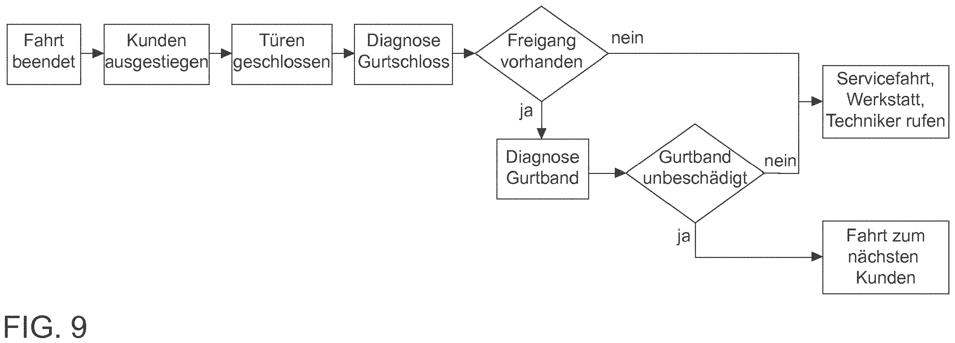

Ein bevorzugter Ablauf der Überprüfung der Sicherheitsgurtanordnung 2 ist schematisch anhand der Fig. 9 dargestellt: Demzufolge wird zunächst eine Kunden-Fahrt beendet, woraufhin der beförderte Kunde aussteigt und sich die Fahrzeugtüren schließen. Vor der Beförderung eines Folge-Kunden erfolgt mittels des Diagnosemoduls 21 zunächst eine Gurtschloss-Diagnose, bei der der Gurtschacht-Sensor 27 eine Freigängigkeit des Einsteckschachtes 29 des Gurtschlosses 9 prüft.

Liegt eine Freigängigkeit vor, erfolgt (prozesstechnisch nachgeschaltet) eine Gurtband-Diagnose. Bei Vorliegen eines beschädigungsfreien Gurtbandes 5 wird das selbstfahrende Fahrzeug einem Folge-Kunden zur Verfügung gestellt. Liegt dagegen ein beschädigtes Gurtband 5 vor, werden Service-Maßnahmen eingeleitet. Solche Service-Maßnahmen werden auch dann eingeleitet, wenn in der Gurtschloss-Diagnose eine mangelhafte Freigängigkeit festgestellt wird.

### Bezugszeichenliste

- 1: Fahrzeugsitz
- 2: Sicherheitsgurtanordnung
- 3: Gurtretraktor
- 5: Sicherheitsgurt
- 7: Steckzunge
- 9: Gurtschloss
- 11: Schultergurtanteil
- 13: Beckengurtanteil
- 14: Antriebsaggregat
- 15: Auswerteeinrichtung
- 19: Gurtschloss-Sensor
- 21: Diagnosemodul
- 23: Innenraumkamera
- 24: Widerstandssensor
- 25: Gurtbandauszug-Sensor
- 27: Einsteckschacht-Sensor
- 29: Einsteckschacht
- 31: Leistungselektronik
- 33: Schachtboden
- 24: Widerstandssensor
- 35: Signalverbindung
- 37: elektrisch leitfähige Fäden

## Patentansprüche

1. Insassen-Rückhaltesystem in einem selbstfahrenden Fahrzeug zur Kunden-Beförderung, wobei das Insassen-Rückhaltesystem (2) dem Kunden eine Rückhaltefunktion bereitstellt, die vom zu befördernden Kunden aktivierbar ist, und das Insassen-Rückhaltesystem (2) eine Auswerteeinheit (15) aufweist, mittels der in einer Sicherheitsprüfung geprüft wird, ob die Rückhaltefunktion vom zu befördernden Kunden aktiviert ist oder nicht, wobei die Auswerteeinheit (15) bei Nichtvorliegen einer aktivierten Rückhaltefunktion eine Losfahrt des Fahrzeugs unterbindet, **dadurch gekennzeichnet, dass** der Auswerteeinheit (15) ein Diagnosemodul (21) zugeordnet ist, mit dem unabhängig von der Sicherheitsprüfung eine Funktionsdiagnose über die Funktionsfähigkeit des Insassen-Rückhaltesystems (2) durchführbar ist, und dass das Diagnosemodul (21) bei Vorliegen eines Defekts im Insassen-Rückhaltesystem (2) eine geeignete Service-Maßnahme einleitet, um den Defekt zu beheben.

2. Insassen-Rückhaltesystem nach Anspruch 1, **dadurch gekennzeichnet, dass** die vom Diagnosemodul (21) durchgeführte Funktionsdiagnose der von der Auswerteeinheit (15) durchgeführten Sicherheitsprüfung zeitlich vorgelagert ist, und dass die Funktionsdiagnose während eines Kundenwechsels zwischen einem bereits beförderten Kunden und einem Folge-Kunden erfolgt, und zwar zu einem Zeitpunkt, zu dem das Fahrzeug noch nicht dem Folge-Kunden zur Verfügung gestellt ist, das heißt sich der Folge-Kunde noch nicht im Fahrzeug befindet.

3. Insassen-Rückhaltesystem nach Anspruch 2, **dadurch gekennzeichnet, dass** das Diagnosemodul (21) bei Vorliegen eines defektfreien Insassen-Rückhaltesystems (2) das Fahrzeug einem Folge-Kunden zur weiteren Kunden-Beförderung zur Verfügung stellt.

4. Insassen-Rückhaltesystem nach Anspruch 1, 2 oder 3, **dadurch gekennzeichnet, dass** das Insassen-Rückhaltesystem (2) eine Sicherheitsgurtanordnung mit einem Sicherheitsgurt (5) ist, der im angelegten Zustand über seine Gurtzunge (7) in einer lösbaren Steckverbindung mit einem fahrzeugfesten Gurtschloss (9) ist, und dass die Auswerteeinheit (15) in der Sicherheitsprüfung ermittelt, ob der Sicherheitsgurt (5) vom zu befördernden Kunden angelegt ist oder nicht.

5. Insassen-Rückhaltesystem nach Anspruch 4, **dadurch gekennzeichnet, dass** die Auswerteeinheit (15) in Signalverbindung mit einem Gurtschloss-Sensor (19) ist, der erfasst, ob die Gurtzunge (7) in das Gurtschloss (9) eingesteckt ist oder nicht, wobei die Auswerteeinheit (15) bei eingesteckter Gurtzunge (7) erkennt, dass der zu befördernde Kunde die Rückhaltefunktion, das heißt den Sicherheitsgurt (5), aktiviert hat.

6. Insassen-Rückhaltesystem nach Anspruch 4 oder 5, **dadurch gekennzeichnet, dass** das Diagnosemodul (21) mit zumindest einem Diagnosesensor (23, 25, 27, 35) in Signalverbindung ist, auf dessen Grundlage das Diagnosemodul (21) in der Funktionsdiagnose ermittelt, ob die Sicherheitsgurtanordnung (2) defektfrei ist oder nicht.

7. Insassen-Rückhaltesystem nach Anspruch 6, **dadurch gekennzeichnet, dass** der Diagnosesensor ein Gurtschacht-Sensor (27) ist, der erfasst, ob im Einsteckschacht (29) des Gurtschlosses (9) eine Freigängigkeit vorliegt oder nicht, und zwar durchgängig über die gesamte Einstecktiefe (t) des Einsteckschachts (29) im Gurtschloss (9).

8. Insassen-Rückhaltesystem nach Anspruch 6 oder 7, **dadurch gekennzeichnet, dass** der Diagnosesensor ein Gurtbandsensor (23, 24) ist, der erfasst, ob am Gurtband (5) des Sicherheitsgurts eine Beschädigung vorliegt oder nicht.

9. Insassen-Rückhaltesystem nach Anspruch 8, **dadurch gekennzeichnet, dass** im Gurtband (5) elektrisch leitfähige Fäden (37) eingewebt sind, und dass der Gurtbandsensor (24) ein Widerstandssensor ist, der über zumindest einen Längenabschnitt des Gurtbands (5) den elektrischen Widerstand der eingeflochtenen elektrisch leitfähigen Fäden (37) erfasst und aus einer detektierten Widerstandsänderung eine Gurtband-Beschädigung ermittelt.

10. Insassen-Rückhaltesystem nach Anspruch 8, **dadurch gekennzeichnet, dass** der Gurtbandsensor (23) eine Innenraumkamera ist, mittels der eine Gurtband-Beschädigung erfassbar ist, und/oder dass der Diagnosesensor ein Gurtbandauszug-Sensor (25) ist, mit dem erfasst wird, ob der Sicherheitsgurt (5) nach Gebrauch ordnungsgemäß aufgewickelt ist oder nicht.

## Claims

1. Occupant restraint system in a self-driving vehicle for customer transportation, wherein the occupant restraint system (2) provides the customer with a restraint function which can be activated by the customer to be transported, and the occupant restraint system (2) has an evaluation unit (15), by means of which it is checked in a safety check whether or not the restraint function has been activated by the customer to be transported, the evaluation unit (15) preventing the vehicle from driving away in the absence of an activated restraint function, **characterized in that** the evaluation unit (15) is assigned a diagnostic module (21), by means of which a functional diagnosis of the functionality of the occupant restraint system (2) can be carried out independently of the safety check, and **in that**, in the presence of a defect in the occupant restraint system (2), the diagnostic module (21) initiates a suitable service measure to eliminate the defect.

2. Occupant restraint system according to Claim 1, **characterized in that** the functional diagnosis carried out by the diagnostic module (21) takes place at a time prior to the safety check carried out by the evaluation unit (15), and **in that** the functional diagnosis takes place during a change of customers between an already transported customer and a next customer, to be precise at a point in time when the vehicle is not yet made available to the next customer, that is to say that the next customer is not yet in the vehicle.

3. Occupant restraint system according to Claim 2, **characterized in that**, in the presence of a defect-free occupant restraint system (2), the diagnostic module (21) makes the vehicle available to a next customer for further customer transportation.

4. Occupant restraint system according to Claim 1, 2 or 3, **characterized in that** the occupant restraint system (2) is a safety belt arrangement with a safety belt (5), which in the fastened state is in a releasable plug-in connection by way of its latch plate (7) with a belt buckle (9) that is fixed to the vehicle, and **in that** the evaluation unit (15) determines in the safety check whether or not the safety belt (5) has been fastened by the customer to be transported.

5. Occupant restraint system according to Claim 4, **characterized in that** the evaluation unit (15) has a signal connection to a belt buckle sensor (19), which senses whether or not the latch plate (7) is inserted in the belt buckle (9), wherein the evaluation unit (15) detects that the customer to be transported has activated the restraint function, that is to say the safety belt (5), if the latch plate (7) is inserted.

6. Occupant restraint system according to Claim 4 or 5, **characterized in that** the diagnostic module (21) has a signal connection to at least one diagnostic sensor (23, 25, 27, 35), on the basis of which the diagnostic module (21) determines in the functional diagnosis whether or not the safety belt arrangement (2) is defect-free.

7. Occupant restraint system according to Claim 6, **characterized in that** the diagnostic sensor is a belt slot sensor (27), which senses whether or not there is a freedom of movement in the insertion slot (29) of the belt buckle (9), to be precise continuously over the entire insertion depth (t) of the insertion slot (29) in the belt buckle (9).

8. Occupant restraint system according to Claim 6 or 7, **characterized in that** the diagnostic sensor is a belt strap sensor (23, 24), which senses whether or not the belt strap (5) of the safety belt is damaged.

9. Occupant restraint system according to Claim 8, **characterized in that** electrically conductive threads (37) are woven into the belt strap (5), and **in that** the belt strap sensor (24) is a resistance sensor which senses the electrical resistance of the woven-in electrically conductive threads (37) over at least a section of the length of the belt strap (5) and determines belt strap damage from a detected change in resistance.

10. Occupant restraint system according to Claim 8, **characterized in that** the belt strap sensor (23) is a passenger compartment camera, by means of which belt strap damage can be sensed, and/or **in that** the diagnostic sensor is a belt strap extension sensor (25), with which it is sensed whether or not the safety belt (5) has been wound up properly after use.

## Revendications

1. Système de retenue de passagers dans un véhicule automoteur destiné au transport de clients, le système de retenue de passagers (2) fournissant au client une fonction de retenue qui peut être activée par le client à transporter, et le système de retenue de passagers (2) présentant une unité d'évaluation (15) qui permet de vérifier lors d'une vérification de sécurité si la fonction de retenue est activée ou non par le client à transporter, dans lequel, en l'absence d'une fonction de retenue activée, l'unité d'évaluation (15) empêche le départ du véhicule,
**caractérisé en ce que** l'unité d'évaluation (15) est associée à un module de diagnostic (21) qui permet d'effectuer, indépendamment de la vérification de sécurité, un diagnostic fonctionnel portant sur la capacité de fonctionnement du système de retenue de passagers (2), et **en ce qu'**en présence d'un défaut dans le système de retenue de passagers (2), le module de diagnostic (21) déclenche une mesure de maintenance appropriée pour éliminer le défaut.

2. Système de retenue de passagers selon la revendication 1, **caractérisé en ce que** le diagnostic fonctionnel effectué par le module de diagnostic (21) est antérieur à la vérification de sécurité effectuée par l'unité d'évaluation (15), et **en ce que** le diagnostic fonctionnel a lieu pendant un changement de client entre un client déjà transporté et un client suivant, notamment à un moment où le véhicule n'est pas encore mis à la disposition du client suivant, c'est-à-dire où le client suivant ne se trouve pas encore dans le véhicule.

3. Système de retenue de passagers selon la revendication 2, **caractérisé en ce qu'**en présence d'un système de retenue de passagers (2) sans défaut, le module de diagnostic (21) met le véhicule à la disposition d'un client suivant afin de poursuivre le transport de clients.

4. Système de retenue de passagers selon la revendication 1, 2 ou 3, **caractérisé en ce que** le système de retenue de passagers (2) est un ensemble de ceinture de sécurité doté d'une ceinture de sécurité (5) qui, à l'état porté, est en connexion enclenchée amovible avec une boucle de ceinture (9), fixée au véhicule, par l'intermédiaire de sa languette de ceinture (7), et **en ce que** l'unité d'évaluation (15) détermine lors de la vérification de sécurité si la ceinture de sécurité (5) est portée ou non par le client à transporter.

5. Système de retenue de passagers selon la revendication 4, **caractérisé en ce que** l'unité d'évaluation (15) est en communication de signal avec un capteur de boucle de ceinture (19) qui détecte si la languette de sangle (7) est enclenchée ou non dans la boucle de ceinture (9), l'unité d'évaluation (15) reconnaissant, lorsque la languette de ceinture (7) est enclenchée, que le client à transporter a activé la fonction de retenue, c'est-à-dire la ceinture de sécurité (5).

6. Système de retenue de passagers selon la revendication 4 ou 5, **caractérisé en ce que** le module de diagnostic (21) est en communication de signal avec au moins un capteur de diagnostic (23, 25, 27, 35) sur la base duquel le module de diagnostic (21) détermine lors du diagnostic fonctionnel si l'ensemble de ceinture de sécurité (2) est exempt de tout défaut ou non.

7. Système de retenue de passagers selon la revendication 6, **caractérisé en ce que** le capteur de diagnostic est un capteur de fente de ceinture (27) qui détecte s'il y a ou non du jeu dans la fente d'enclenchement (29) de la boucle de ceinture (9), notamment en continu sur toute la profondeur d'enclenchement (t) de la fente d'enclenchement (29) dans la boucle de ceinture (9).

8. Système de retenue de passagers selon la revendication 6 ou 7, **caractérisé en ce que** le capteur de diagnostic est un capteur de sangle (23, 24) qui détecte s'il existe ou non un endommagement au niveau de la sangle (5) de la ceinture de sécurité.

9. Système de retenue de passagers selon la revendication 8, **caractérisé en ce que** des fils électriquement conducteurs (37) sont tissés dans la sangle (5), et **en ce que** le capteur de sangle (24) est un capteur résistif qui détecte sur au moins une section longitudinale de la sangle (5) la résistance électrique (5) des fils électriquement conducteurs (37) entrelacés et détermine un endommagement de la sangle à partir d'une variation de résistance détectée.

10. Système de retenue de passagers selon la revendication 8, **caractérisé en ce que** le capteur de sangle (23) est une caméra d'habitacle qui permet de détecter un endommagement de la sangle, et/ou **en ce que** le capteur de diagnostic est un capteur d'enrouleur de sangle (25) qui permet de détecter si la ceinture de sécurité (5) est correctement enroulée ou non après son utilisation.
